# FASCICULE DE BREVET EUROPEEN

(11) **EP 4 021 749 B1**
(45) Date de publication et mention de la délivrance du brevet: **06.09.2023**
(21) Numéro de dépôt: 20756927.8
(22) Date de dépôt: 28.07.2020
(51) Int. Cl.: B60K 6/48, B60K 6/52, B60W 10/02, B60W 10/06, B60W 10/08, B60W 10/26, B60W 20/13, B60W 20/15, B60W 30/186, F16D 66/00

(54) **PROCÉDÉ DE PROTECTION D'UN EMBRAYAGE D'UN VÉHICULE HYBRIDE CONTRE UNE SURCHAUFFE PAR ARRÊT DE CHARGE**
VERFAHREN ZUM SCHUTZ EINER KUPPLUNG EINES HYBRIDFAHRZEUGS VOR ÜBERHITZUNG DURCH LASTABBRUCH
METHOD FOR PROTECTING A CLUTCH OF A HYBRID VEHICLE AGAINST OVERHEATING BY LOAD STOPPING

(30) Priorité: 30.08.2019 FR 1909567
(43) Date de publication de la demande: 06.07.2022
(73) Titulaire: PSA Automobiles SA, 78300 Poissy (FR)
(72) Inventeur: MILHAU, Yohan, 78630 ORGEVAL (FR); HABBANI, Ridouane, 92600 ASNIERES SUR SEINE (FR); ROCQ, Gaetan, 78125 LA BOISSIERE ECOLE (FR); SIRAUDEAU, Franck, 78300 POISSY (FR)
(86) Numéro de dépôt international: PCT/FR2020/051382
(87) Numéro de publication internationale: WO 2021/038150

(56) Documents cités:
- WO-A1-2012/104558
- WO-A1-2019/012193
- US-A1- 2017 259 804

## Description

La présente invention revendique la priorité de la demande française 1909567 déposée le 30.08.2019.

### Domaine technique de l'invention

La présente invention concerne un procédé de protection contre une surchauffe d'un embrayage d'un véhicule hybride comportant un moteur thermique par gestion du rechargement par le moteur thermique d'un stockeur d'énergie d'au moins une source motrice autre que le moteur thermique. L'embrayage relie au moins le moteur thermique à au moins un arbre d'entraînement de roues du véhicule.

### Art antérieur

Il est connu de l'état de la technique un véhicule hybride comportant un moteur thermique, au moins une autre source motrice comprenant un stockeur d'énergie, un embrayage reliant au moins le moteur thermique à au moins un arbre d'entraînement de roues du véhicule.

Dans cette configuration, la ou les autres sources motrices présentent deux modes d'actionnement : un mode moteur dans lequel elles fournissent de l'énergie de manière à délivrer un couple de traction ou d'assistance au moteur thermique et un mode générateur dans lequel elles stockent de l'énergie fournie par le moteur thermique via le stockeur d'énergie.

Le moteur thermique et la ou les autres sources motrices fournissent respectivement un couple moteur thermique et un couple de traction ou d'assistance destinés à répondre à une demande de puissance motrice instantanée de la part du conducteur du véhicule.

Il est aussi prévu un moyen d'analyse et de commande apte à commander le moteur thermique et la ou les autres sources motrices. Une limitation virtuelle du moteur thermique est fixée par le moyen d'analyse. Au-dessus de la limitation virtuelle, le moyen d'analyse et de commande impose à la ou les autres sources motrices de fonctionner au moins partiellement en mode moteur.

La demande de puissance motrice instantanée de la part du conducteur est alors prioritaire de sorte que si un couple de traction ou d'assistance est nécessaire ou souhaitable en réponse à cette volonté, le moyen d'analyse et de commande fait basculer au moins partiellement la ou les autres sources motrices en mode moteur le temps de répondre à la demande de puissance motrice instantanée.

La ou les sources motrices pouvant fonctionner en tant que génératrices peuvent être placées entre l'embrayage et les roues du véhicule hybride ou directement sur les roues.

Un tel véhicule est décrit dans le document WO 2012/104558 A1.

Dans certaines situations de vie, il est nécessaire d'utiliser l'embrayage. Cet embrayage chauffe lors qu'il est glissant, l'énergie dissipée dans l'embrayage glissant étant égale à l'intégrale de la puissance dissipée entre le vilebrequin et l'arbre d'entraînement des roues, cette puissance dissipée pouvant être calculée par le produit de l'écart de régime en amont et aval de l'embrayage et du couple transmissible par ledit embrayage.

En forte pente ou forte masse du véhicule, par exemple par traction d'une caravane, ou forte demande en couple du conducteur du véhicule, la chauffe de l'embrayage est très importante d'autant plus que son système de refroidissement est petit.

De plus, dans un mode de fonctionnement en génératrice de l'autre ou des autres sources motrices, le moteur thermique sert au rechargement d'un stockeur d'énergie, ce qui accroît la température de fonctionnement de l'embrayage.

Par conséquent, le problème à la base de l'invention est, pour un véhicule hybride comportant au moins une source motrice autre que thermique et un moteur thermique connecté à au moins un arbre d'entraînement par un embrayage, d'éviter que l'embrayage ne chauffe dans certaines situations de vie de roulage du véhicule.

### Résumé de l'invention

A cet effet, la présente invention concerne un procédé de protection d'un embrayage d'un véhicule hybride comportant un moteur thermique, au moins une autre source motrice comprenant un stockeur d'énergie, l'embrayage reliant au moins le moteur thermique à au moins un arbre d'entraînement de roues du véhicule, ladite au moins une autre source motrice étant située entre l'embrayage et les roues, ou directement sur les roues, et présentant deux modes d'actionnement, un mode moteur dans lequel elle fournit de l'énergie de manière à délivrer un couple de traction ou d'assistance au moteur thermique et un mode générateur dans lequel elle alimente un circuit électrique en ayant pour conséquence de pouvoir stocker de l'énergie fournie par le moteur thermique via le stockeur d'énergie, le moteur thermique et ladite au moins une autre source motrice fournissant respectivement un couple moteur thermique et un couple de traction ou d'assistance destinés à répondre à une demande de puissance motrice instantanée de la part du conducteur, un moyen d'analyse et de commande étant apte à commander le moteur thermique et ladite au moins une autre source motrice, à déterminer un niveau de charge du stockeur d'énergie, remarquable en ce que, quand la température mesurée ou estimée de l'embrayage dépasse un premier seuil de température prédéterminé et qu'un écart de régime entre l'amont et l'aval de l'embrayage dépasse un seuil prédéterminé calibrable compris entre 0 et 1.000 tours par minute, le moyen d'analyse et de commande impose au moteur thermique de ne pas alimenter le stockeur d'énergie tout en maintenant inactif ladite au moins une autre source motrice en mode moteur.

Le seuil d'écart de régime est dépendant de la température. Plus la température de l'embrayage est élevée et plus le seuil de régime devra être bas, pratiquement égal à 0. Si la température de l'embrayage est inférieure au seuil de température, il n'y a pas d'échauffement de l'embrayage et un seuil d'écart de régime n'est pas à considérer. Des valeurs de puissance maximale dissipable seront ultérieurement données, cette puissance maximale dissipable augmentant plus la température de l'embrayage est faible. L'alimentation du stockeur d'énergie par le moteur thermique provoquait une élévation de la température de l'embrayage. A un premier seuil de température, avantageusement inférieur à la température maximale que peut supporter l'embrayage, la présente invention propose de ne plus alimenter le circuit électrique d'énergie par le moteur thermique afin d'au moins freiner la montée en température de l'embrayage, voire de la faire diminuer. Avantageusement, le moyen d'analyse et de commande prend aussi en compte deux seuils de charge du stockeur d'énergie prédéfinis, l'un étant défini comme un seuil de charge prioritaire et l'autre étant défini comme un seuil de charge délestable, le seuil de charge prioritaire étant inférieur au seuil de charge délestable, avec lorsque le moyen d'analyse et de commande détermine qu'un niveau de charge du stockeur d'énergie est inférieur au seuil de charge prioritaire et que la température détectée de l'embrayage est supérieure au premier seuil de température prédéterminé, le moyen d'analyse et de commande maintient le moteur thermique en fonction d'alimentation du stockeur d'énergie.

Ceci permet de ne pas décharger complètement un stockeur d'énergie alors insuffisamment chargé. Par exemple, on peut avoir un seuil de charge prioritaire à 13% du seuil de charge délestable, il est possible d'abaisser le seuil de charge prioritaire à 11% en cas de température élevée et de fort delta de régime, comme précédemment défini et ce afin de pouvoir utiliser la ou les sources motrices autres que thermique.

Avantageusement, quand la température mesurée ou estimée de l'embrayage dépasse un deuxième seuil de température prédéterminé, un basculement au moins partiel de ladite au moins une autre source motrice en mode moteur est effectué par le moyen d'analyse et de commande, le couple transmis par l'embrayage et par conséquent le couple fourni par le moteur thermique étant alors diminués.

La présente invention propose au début de réduire la surchauffe de l'embrayage en n'imposant pas au moteur thermique d'alimenter électriquement le stockeur d'énergie. Cette mesure peut se révéler non suffisante et une augmentation de température de l'embrayage peut se poursuivre.

Si tel est le cas, la ou les autres sources motrices sont démarrées et compensent une diminution de production de couple du moteur thermique, voire même son arrêt, ce qui fera baisser la température de l'embrayage.

En prenant l'exemple non limitatif d'une température maximale que peut supporter l'embrayage supérieure à 180°C, à cette température maximale de 180°C, une puissance dissipable peut être à maintenir inférieure à 10 kWatt pour éviter un échauffement de l'embrayage. Par contre, dans cette configuration, la puissance dissipable à 150°C peut monter jusqu'à 40 à 50kWatt avant un basculement progressif. En dessous de 100°C, la puissance dissipable peut ne pas être régulée par un basculement et seulement contrôlée le cas échéant par une suspension de la charge du stockeur d'énergie par le moteur thermique.

A partir des valeurs de puissance dissipable maximale pour une température entre 100 et 180°C, voire plus, on détermine un couple en fonction du régime afin de ne pas dépasser une puissance dissipable maximale prédéterminée pour une température donnée. Ceci permet d'anticiper un échauffement trop conséquent de l'embrayage et d'éviter que la température maximale ne soit atteinte ou trop vite atteinte.

Le principe à la base de ce mode optionnel de la présente invention est de réduire le couple transmis par l'embrayage via la sollicitation d'au moins une autre source motrice que le moteur thermique. Il est alors possible de maîtriser la puissance dissipée car le couple de l'autre source motrice est calculé de façon à ce que la puissance à transmettre à l'embrayage ne dépasse pas une valeur équivalente à la valeur de dissipation calorifique de l'embrayage.

Un basculement partiel peut se faire à partir du deuxième seuil qui peut être avantageusement inférieur à la température maximale que peut supporter l'embrayage, ceci pour la protection de l'embrayage.

Pour ordre d'idée, le deuxième seuil de température peut être de l'ordre 180°C ou au-dessus de 180°C en dépendant notamment du modèle de l'embrayage, tout en étant inférieur à la température maximale que peut supporter l'embrayage. La puissance dissipable est alors à maintenir en dessous d'une certaine valeur, par exemple, en dessous de 10kWatt, ce qui est réalisé par le basculement au moins partiel de ladite au moins une autre source motrice en mode moteur.

Il est effectué un leurre de la limitation du moteur thermique pour la répartition de couple au niveau de la gestion de la répartition entre le moteur et une ou des autres sources motrices quand la température de l'embrayage dépasse le deuxième seuil de température.

La consigne de couple est réalisée par le moteur thermique jusqu'à la limitation virtuelle du moteur thermique. Au-dessus de cette limitation virtuelle, la ou les autres sources motrices sont utilisées soit en complément du moteur thermique travaillant à puissance réduite ou soit avec un moteur thermique arrêté.

Selon l'invention, la limitation virtuelle du moteur est fonction d'un critère dépendant de la température de l'embrayage pour le protéger. Cette limitation virtuelle pour la protection de l'embrayage dépend de la température de l'embrayage, de l'écart de régime entre l'arbre d'entraînement et le vilebrequin du moteur thermique.

Plus le delta de régime est faible, plus le couple transmissible avant utilisation de la ou des sources motrices sera élevé car l'énergie dissipée ne sera pas plus grande. Avec ce mécanisme on autorise une certaine puissance maximale de dissipation dans l'embrayage. Lorsque la température de l'embrayage sera proche du deuxième seuil de température donc se rapprochant de la température maximale de l'embrayage, la puissance maximale autorisée sera proche de la puissance de dissipation thermique de l'embrayage.

Le couple transmis par l'embrayage peut être diminué jusqu'à être annulé dans des cas de température extrême et ce le temps qu'un delta de régime de l'embrayage s'annule totalement.

Dans le cadre de l'invention, il est donc possible de conserver le moteur thermique en fonctionnement mais avec une puissance réduite.

Avantageusement, le premier seuil de température est de 100°C et le deuxième seuil de température est de 180°C avec une plage de +/- 20% autour de chaque seuil. Par mesure de sécurité, le deuxième seuil peut être inférieur à la température maximale que doit supporter l'embrayage et qui est prédéterminée selon le modèle de l'embrayage.

Avantageusement, le basculement au moins partiel de ladite au moins une autre source motrice en mode moteur s'effectue de manière progressive.

Avantageusement, ladite au moins une autre source motrice comprend au moins deux autres sources motrices reliées respectivement à un arbre d'entraînement, une première desdites au moins deux autres sources motrices étant basculée en priorité à ladite au moins une deuxième source et, quand, après le basculement de la première source motrice prioritaire, la température détectée reste supérieure au deuxième seuil de température, ladite au moins une deuxième source est aussi basculée.

L'invention concerne aussi un ensemble d'un moteur thermique, d'au moins une autre source motrice comprenant un stockeur d'énergie, d'un embrayage reliant au moins le moteur thermique à au moins un arbre d'entraînement de roues du véhicule et d'un moyen d'analyse et de commande, l'autre source motrice étant située entre l'embrayage et les roues, ou directement sur les roues, remarquable en ce qu'il met en oeuvre un tel procédé de protection de l'embrayage, le moyen d'analyse et de commande présentant des moyens de mémorisation d'au moins un premier seuil de température, des moyens de comparaison dudit au moins un premier seuil de température avec une température mesurée ou estimée de l'embrayage et des moyens de suspension de l'alimentation du stockeur d'énergie par le moteur thermique.

Avantageusement, ladite au moins une autre source motrice est une machine électrique, le stockeur d'énergie étant au moins une batterie.

L'invention concerne enfin un véhicule automobile hybride, remarquable en ce qu'il comporte un tel ensemble, le véhicule automobile comprenant un moyen de mesure de la température de l'embrayage.

La présente invention permet une protection de l'embrayage par maîtrise de sa température ainsi qu'une maîtrise de l'énergie électrique, une optimisation du système de refroidissement avec pas ou peu impact sur la prestation et la maîtrise de la motricité.

Pour un véhicule à quatre roues motrices il n'y a pas d'impact sur la répartition entre arbre d'entraînement avant et arbre d'entraînement arrière.

Avantageusement, le véhicule automobile est un véhicule à quatre roues motrices avec un arbre d'entraînement avant couplé à une machine électrique avant et un arbre d'entraînement arrière couplé à une machine électrique arrière, le moyen d'analyse et de commande présentant des moyens de basculement de la machine électrique avant prioritaires par rapport aux moyens de basculement de la machine électrique arrière.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] - la figure 1 est un schéma d'un véhicule hybride pouvant mettre en oeuvre le procédé de protection contre la surchauffe d'un embrayage d'un moteur thermique selon la présente invention,
[Fig. 2] - la figure 2 montre un mode de réalisation d'un logigramme du procédé de protection conformément à un mode de réalisation de la présente invention dans le cas d'un embrayage chaud avec respectivement une charge du stockeur d'énergie suffisante et insuffisante,
[Fig. 3] - la figure 3 montre des courbes de couple fourni par un moteur thermique et deux machines électriques avant et arrière ainsi que des limites virtuelles avec et sans mise en oeuvre du procédé selon l'invention,
[Fig. 4] - la figure 4 montre trois groupes de courbes de puissance fournie par un moteur thermique et au moins une source autre que thermique pour un véhicule automobile à quatre roues motrices dans divers cas de figure avec et sans mise en oeuvre du procédé selon l'invention.

### Description détaillée de l'invention

Toutes les figures sont à prendre en combinaison et il peut être fait référence lors de la description d'une figure à des références se trouvant sur une des autres figures.

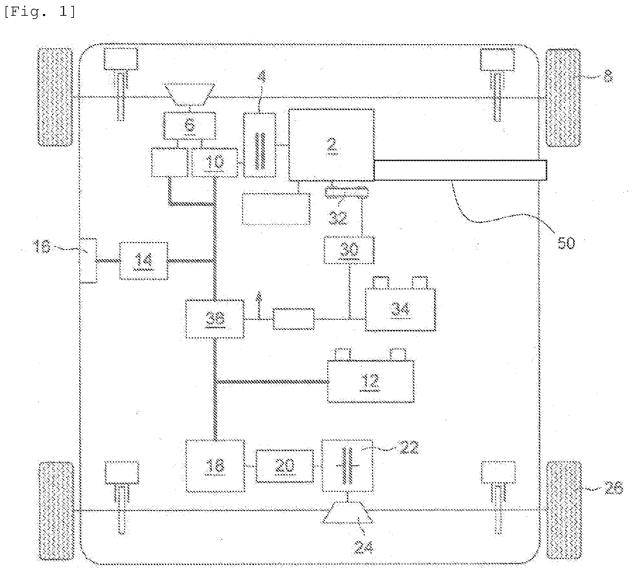

En se référant à la figure 1, la présente invention concerne un procédé de protection d'un embrayage 4 d'un véhicule hybride comportant un moteur thermique 2, au moins une source motrice 10, 18 autre que thermique, dite ci-après autre source motrice et comprenant un stockeur d'énergie 12, l'embrayage 4 reliant au moins le moteur thermique 2 à au moins un arbre d'entraînement de roues 8, 26 du véhicule.

La présente invention s'adresse plus particulièrement à une architecture dans laquelle l'embrayage de décollage est positionné entre la ou les autres sources motrices 10, 18 et le moteur thermique 2. Si une boîte de vitesse est fermée, alors la ou les sources motrices 10, 18 peuvent être reliées directement aux roues 8, 26.

Comme il va être spécifié dans la description de la figure 1, la ou les sources motrices 10, 18 peuvent être avantageusement des machines électriques mais peuvent être remplacées par exemple par une technologie pneumatique ou hydraulique.

L'embrayage 4 peut être piloté de manière à répondre à une sollicitation de cette stratégie. Il est prévu une transmission 6 présentant différents rapports de vitesse et reliée aux roues avant motrices 8 de ce véhicule.

Une ligne d'échappement 50 dispose de moyens aptes à traiter les gaz d'échappement, dont notamment les imbrûlés, provenant de la chambre de combustion du moteur thermique 2, tels que par exemple un filtre à particules et/ou un catalyseur d'oxydation.

L'arbre d'entrée de la transmission 6 recevant le mouvement de l'embrayage 4, comporte comme autre source motrice une machine électrique avant de traction 10 alimentée par une seconde batterie basse tension de traction 12, comme stockeur d'énergie. De cette manière la machine électrique avant 10 peut délivrer un couple sur les roues motrices 8 sans passer par l'embrayage 4, en utilisant les différents rapports de vitesse proposés par la transmission 6. Un chargeur embarqué 14 peut être relié par une prise extérieure 16 à un réseau de distribution d'électricité, pour recharger la seconde batterie de traction 12 quand le véhicule est à l'arrêt. La seconde batterie de traction 12 présente une basse tension, qui peut être par exemple de 220 ou 300 Volts.

La seconde batterie de traction 12 alimente aussi une machine électrique arrière de traction 18 reliée successivement par un réducteur 20 et un système de crabotage 22, à un différentiel arrière 24 répartissant le mouvement vers les roues arrière 26 du véhicule.

Un alternateur 30, également désigné alterno-démarreur, relié en permanence par une courroie 32 au moteur thermique 2, alimente un réseau de bord, dit circuit annexe, comportant une batterie du circuit annexe très basse tension 34.

En complément la batterie du circuit annexe très basse tension 34, dite aussi première batterie par opposition à la seconde batterie de traction 12, peut être chargée par un convertisseur de tension continue DC/DC 36, recevant une énergie électrique de la seconde batterie de traction 12, ou d'une machine électrique avant 10 ou arrière 18 si le niveau d'énergie de cette seconde batterie de traction 12 est insuffisant.

Lors des freinages du véhicule ou d'un relâchement de la pédale d'accélérateur, les machines électriques 10, 18 travaillent en génératrice en délivrant un couple de freinage, pour recharger la seconde batterie de traction 12 et récupérer une énergie.

Un moyen d'analyse et de commande, non représenté à la figure 1, contrôle le fonctionnement d'un tel groupe motopropulseur pour répondre aux demandes du conducteur tout en optimisant les consommations d'énergie et les émissions de gaz polluants selon des stratégies classiques.

Dans cet exemple d'exécution, la seconde batterie de traction 12 constitue le stockeur d'énergie selon l'invention tandis que l'ensemble formé par la machine électrique avant de traction 10 et la machine électrique arrière de traction 18 constitue l'autre source motrice selon l'invention.

D'une manière générale, la ou les autres sources motrices 10, 18, à savoir par exemple les machines électriques de la figure 1, présentent deux modes d'actionnement.

Le premier mode est un mode moteur dans lequel elles fournissent de l'énergie de manière à délivrer un couple de traction ou d'assistance au moteur thermique 2.

Le deuxième mode est un mode générateur dans lequel elles alimentent un circuit électrique en ayant pour conséquence de pouvoir stocker de l'énergie fournie par le moteur thermique 2 via le stockeur d'énergie 12. Ceci peut conduire à une montée en température de l'embrayage 4.

Le moteur thermique 2 et la ou les autres sources motrices 10, 18 fournissent respectivement un couple moteur thermique et un couple de traction ou d'assistance destinés à répondre à une demande de puissance motrice instantanée de la part du conducteur.

Le moyen d'analyse et de commande est apte à commander le moteur thermique 2 et la ou les autres sources motrices 10, 18 et à déterminer un niveau de charge du stockeur d'énergie 12.

Le moteur thermique 2 alimente le stockeur d'énergie 12 lors de son fonctionnement via l'alternateur ou alterno-démarreur, ce qui peut aussi faire chauffer l'embrayage 4.

Selon l'invention, quand la température mesurée ou estimée de l'embrayage 4 dépasse un premier seuil de température prédéterminé et qu'un écart de régime entre l'amont et l'aval de l'embrayage 4 dépasse un seuil prédéterminé calibrable compris entre 0 et 1.000 tours par minute, le moyen d'analyse et de commande impose au moteur thermique de ne pas alimenter le stockeur d'énergie 12 tout en maintenant inactif ladite au moins une autre source motrice 10, 18 en mode moteur.

Ce premier seuil dépend du modèle de l'embrayage mais peut être évalué vers les 100°C avec une marge de +/- 20% autour de cette valeur.

Le moyen d'analyse et de commande peut prendre aussi en compte deux seuils de charge du stockeur d'énergie 12 prédéfinis.

Un premier seuil peut être défini comme un seuil d'activation de charge prioritaire et un deuxième seuil peut être défini comme un seuil d'activation de charge délestable. Le seuil de charge prioritaire est inférieur au seuil de charge délestable.

Lorsque le moyen d'analyse et de commande détermine qu'un niveau de charge du stockeur d'énergie 12 est inférieur au seuil d'activation de charge prioritaire et que la température détectée de l'embrayage 4 est supérieure au premier seuil de température prédéterminé, le moyen d'analyse et de commande maintient le moteur thermique 2 en fonction d'alimentation du stockeur d'énergie 12.

Il se peut cependant que la suspension de l'alimentation du stockeur d'énergie 12 par le moteur thermique 2 ne suffise pas à stopper ou à ralentir fortement l'augmentation de la température de l'embrayage 4.

Pour anticiper un échauffement maximal de l'embrayage 4 ou freiner cet échauffement, quand la température mesurée ou estimée de l'embrayage 4 dépasse un deuxième seuil de température prédéterminé supérieur au premier seuil de température, un basculement au moins partiel de ladite au moins une autre source motrice 10, 18 en mode moteur peut être effectué par le moyen d'analyse et de commande. Le couple transmis par l'embrayage 2 et par conséquent le couple fourni par le moteur thermique 2 peuvent alors être diminués.

Au moins partiel signifie qu'en cas de plusieurs autres sources motrices 10, 18, seule une partie des autres sources motrices peut être basculée. Ce basculement peut être progressif en étant accentué plus la température de l'embrayage 4 augmente.

Comme précédemment mentionné, le premier seuil de température peut être de 100°C. Le deuxième seuil de température peut être de 180°C avec une plage de +/- 20% autour de chaque seuil, le premier seuil de température étant à proche de la moitié du deuxième seuil de température et le deuxième seuil étant inférieur à la température maximale à supporter par l'embrayage 4 pour garantir la protection de l'embrayage contre un échauffement dangereux.

Ainsi, préalablement au basculement au moins partiel de la ou des autres sources motrices 10, 18 en mode moteur, le moyen d'analyse et de commande impose tout d'abord au moteur thermique de ne pas alimenter le stockeur d'énergie 12 quand la température détectée de l'embrayage 4 est supérieure au premier seuil de température de l'embrayage 4.

Le moteur thermique 2 est alors moins sollicité et chauffe moins de même que l'embrayage 4.

Plus tard, le basculement de la ou des autres sources motrices 12, 18 s'effectue quand la température détectée même sans alimentation électrique du stockeur d'énergie 12 devient supérieure au deuxième seuil de température, avantageusement inférieure à la température maximale tolérable pour l'embrayage 4, afin de tenir compte de l'inertie thermique de l'embrayage qui pourrait conduire à une augmentation de température même si l'alimentation du stockeur d'énergie 12 par le moteur thermique est suspendue.

Le basculement est plus adéquat pour un faible régime du moteur. A contrario, à embrayage chaud et régime élevé, donc avec embrayage fermé, il est cependant possible de continuer d'utiliser le moteur thermique 2 sans augmenter la température de l'embrayage 4.

La ou les autres sources motrices 10 et 18 sont donc utilisées pour limiter la surchauffe de l'embrayage 4. Le moteur thermique 2 est alors moins sollicité, ce qui permet de réduire l'énergie dissipée dans l'embrayage 4.

Ainsi, plus le delta de régime est faible, plus le couple transmissible avant utilisation de la ou des autres sources électriques sera élevé. Avec ce mécanisme on autorise une certaine puissance maximale de dissipation dans l'embrayage 4. Lorsque la température de l'embrayage sera proche de sa température maximale, de par l'atteinte du deuxième seuil, la puissance maximale autorisée sera proche de la puissance de dissipation thermique de l'embrayage 4 et sans la dépasser de façon à ne pas augmenter la température de l'embrayage.

Le couple transmis par l'embrayage 2 peut être diminué jusqu'à être annulé, le moteur thermique 2 étant arrêté ou plus du tout utilisé pour la traction.

Ceci est possible quand la demande de couple par le conducteur est réduite ou quand le stockeur d'énergie 12 est suffisamment chargé.

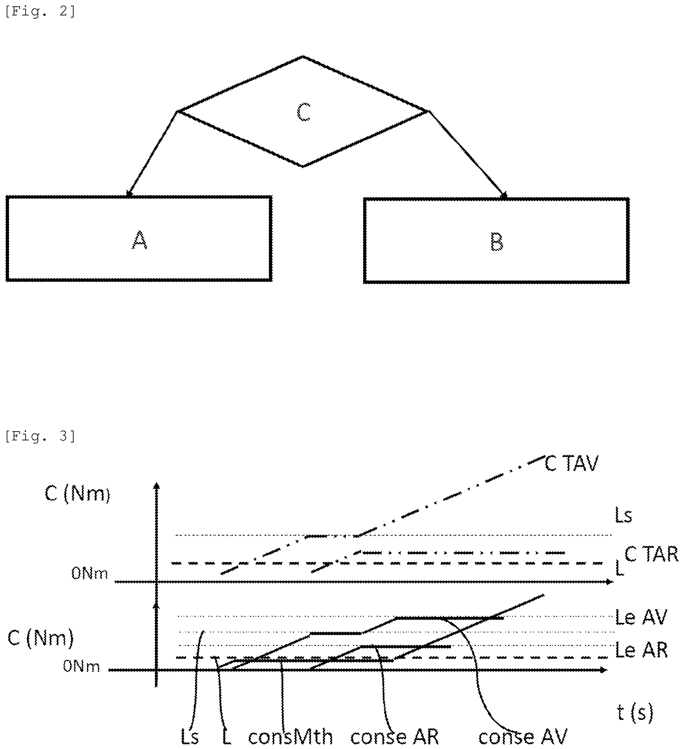

La figure 2 montre un logigramme du procédé de protection conformément à la présente invention. La référence C symbolise un embrayage chaud. Il est alors possible de procéder soit à aucun leurre de la puissance cible de recharge ce qui est référencé A, ceci dans le cas où la charge du stockeur d'énergie est insuffisante ou à un leurre de la puissance cible de recharge, ce qui est référencé B dans le cas où la charge du stockeur d'énergie est suffisante, ce qui conduit à un arrêt de l'alimentation du stockeur d'énergie 12.

Dans le cas B, il est essayé de repousser la puissance prioritaire à plus tard pour éviter de chauffer encore plus l'embrayage par un leurre de la puissance prioritaire dans une plage de charge du stockeur d'énergie acceptable.

Si malgré cela, il est nécessaire de réaliser une puissance prioritaire, alors le comportement du groupe motopropulseur est identique embrayage chaud ou non chaud, la protection contre une surchauffe de l'embrayage ne devenant plus prioritaire.

Quand au moins deux autres sources motrices reliées respectivement à un arbre d'entraînement sont présentes, il est possible de ne basculer qu'une première 10 desdites au moins deux autres sources motrices 10, 18 en priorité à ladite au moins une deuxième source 18.

Cependant, quand, après le basculement de la première source motrice 10 prioritaire, la température détectée reste supérieure à la température maximale de l'embrayage 4, la deuxième source 18 est aussi basculée. Ceci vaut consécutivement pour plusieurs autres sources motrices présentes dans le véhicule hybride. Particulièrement, en cas de saturation de la première source motrice 10, la deuxième source 18 peut prendre le relais. En se référant à nouveau principalement à la figure 1, la présente invention concerne aussi un ensemble d'un moteur thermique 2, d'au moins une autre source motrice 10, 18 comprenant un stockeur d'énergie 12, d'un embrayage 4 reliant au moins le moteur thermique 2 à au moins un arbre d'entraînement de roues du véhicule et d'un moyen d'analyse et de commande. L'ensemble ainsi réalisé met en oeuvre un procédé de protection de l'embrayage 4 tel que précédemment décrit.

Ceci est fait par le moyen d'analyse et de commande présentant des moyens de mémorisation d'au moins un premier seuil de température, des moyens de comparaison et de calcul dudit au moins un premier seuil de température avec une température mesurée ou estimée de l'embrayage et des moyens de suspension de l'alimentation du stockeur d'énergie 12 par le moteur thermique 2.

La ou les autres sources motrices 10, 18 peuvent être des machines électriques, le stockeur d'énergie 12 pouvant être au moins une batterie.

La présente invention concerne un véhicule automobile hybride comportant un ensemble tel que précédemment décrit.

Le véhicule automobile peut être un véhicule à quatre roues motrices avec un arbre d'entraînement avant couplé à une machine électrique avant 10 et un arbre d'entraînement arrière couplé à une machine électrique arrière 18.

Chaque autre source motrice 10, 18 peut être située entre l'embrayage 4 du véhicule automobile et les roues, ou directement sur les roues.

Le moyen d'analyse et de commande peut présenter des moyens de basculement de la machine électrique avant 10 prioritaires par rapport aux moyens de basculement de la machine électrique arrière 18. Ceci n'est cependant pas limitatif.

La limitation virtuelle pour la protection de l'embrayage 4 dépend de la température de l'embrayage et de l'écart de régime entre l'arbre primaire et le vilebrequin.

Le rejet se fait ici de préférence sur la machine électrique avant 10 malgré le fait que la machine électrique arrière 18 ait fréquemment un meilleur rendement.

Comme la répartition de couple va dépendre de l'écart de régime, celle-ci va être très dynamique c'est pour cela qu'on privilégie la machine électrique avant à la machine électrique arrière pour ne pas avoir de répercussion sur la répartition de couple sur arbres avant et arrière.

Si la machine électrique avant 10 n'est pas en mesure de satisfaire l'aide au décollage, la machine électrique arrière 18 s'en chargera. Il est avantageux que la modification de la répartition de couple entre le moteur thermique 2 et la ou les autres sources motrices n'ait pas d'impact sur les lois de passage du fait de la dynamique rapide du delta de régime.

Le stockeur d'énergie 12 peut être une batterie de traction. En cas de recharge dite prioritaire de la batterie de traction, la stratégie de délestage du moteur thermique soit par sa déconnexion de l'alterno-démarreur ou par sa diminution de puissance de fourniture de couple ne pourra pas être appliquée afin de ne pas plus vider la batterie de traction.

Il est possible cependant de décaler temporairement en le diminuant le seuil de charge prioritaire afin qu'on puisse privilégier l'utilisation d'une ou des autres sources motrices.

Il est utilisé la machine électrique avant pour compenser l'embrayage 4 chaud malgré que la machine électrique arrière soit prioritaire car ceci évite un impact de répartition de couple.

La figure 3 montre deux séries de courbes de couple C en Newton.mètre (N.m).

Pour la première série supérieure de courbes, la courbe C TAV est la courbe de couple de train avant, la courbe C TAR est la courbe de couple de train arrière. Il est visible que le trait horizontal supérieur symbolisant la limite virtuelle Ls sans mise en oeuvre du procédé de protection d'une surchauffe de l'embrayage est supérieur au trait horizontal inférieur symbolisant la limite virtuelle L avec mise en oeuvre du procédé.

Pour la deuxième série inférieure de courbes, la courbe consMth est la courbe de consigne de couple transmis par l'embrayage, la courbe conse AR est la courbe de consigne de couple fourni par la machine électrique arrière et la courbe conse AV est la courbe de consigne de couple fourni par la machine électrique avant.

La limite virtuelle Ls est la limite virtuelle sans mise en oeuvre du procédé de protection d'une surchauffe de l'embrayage et est supérieure à la limite virtuelle L avec mise en oeuvre du procédé. Les références Le AV et Le AR sont respectivement les limites virtuelles de la machine électrique avant et de la machine électrique arrière.

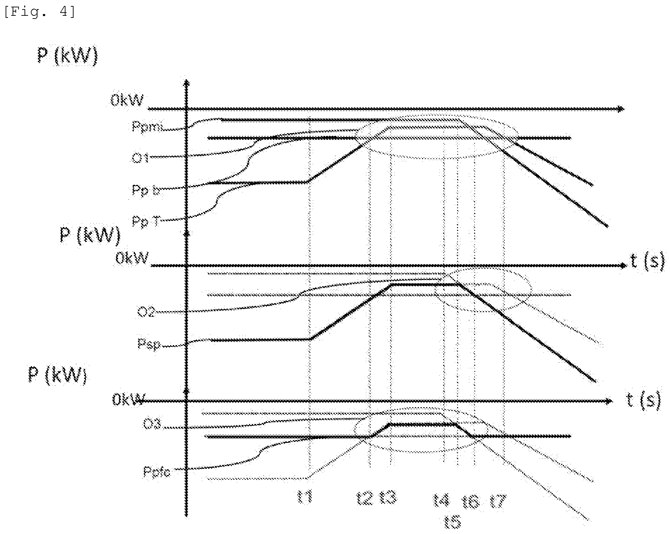

La figure 4 montre trois groupes de courbes de puissance P en kWatt (kW) en fonction du temps t en secondes (s) pour un véhicule automobile avec un moteur thermique et au moins une source motrice autre que thermique, le véhicule étant à quatre roues motrices.

A cette figure 4, on a figuré 7 temps t1, t2, t3, t4, t5, t6 et t7. Lorsque t<t1, la puissance brute respectée (l'état de charge de la batteries, SOC, est de 15% par exemple). Lorsque t1<t<t2, la réduction de la puissance maximale est autorisée car l'embrayage est chaud et le delta régime est important ou non nul, sans impact sur la puissance cible de recharge. Lorsque t2<t<t4, la puissance maximale est autorisée de recharge qui limite la puissance cible de recharge, car l'embrayage est chaud avec un delta de régime non nul. On effectue donc une protection de l'embrayage, et l'état de charge de la batteries, SOC, diminue. Lorsque t4<t<t5 : l'état de charge de la batteries, SOC, continue à diminuer. De ce fait, on commence à imposer une contrainte minimale de recharge même en cas d'embrayage chaud pour ne pas sur-vider la batterie, sans pour autant qu'elle soit effective, car la protection SOC n'a pas atteint la consigne de recharge cible. Lorsque t5<t<t6 : l'état de charge de la batteries, l'état de charge de la batteries, SOC , continue à diminuer, la contrainte minimale de recharge devient effective et, de ce fait, on effectue une recharge plus que la protection de l'embrayage ne l'autorise. Lorsque t6<t : l'état de charge de la batteries, SOC , chute énormément, venant contraindre la limitation de puissance à tel point qu'on ne respecte plus du tout la contrainte d'embrayage chaud mais on garantit la gestion de l'état de charge de la batteries, SOC.

Le premier groupe de courbes montre une courbe de puissance prioritaire brute Pp b, une courbe de puissance prioritaire en fonction d'une température de l'embrayage Pp T et une courbe de puissance prioritaire minimale pour la protection de la charge contenue dans le stockeur d'énergie Ppmi.

La deuxième série de courbes en dessous de la première série montre une courbe de puissance prioritaire minimale pour la protection de la charge contenue dans le stockeur d'énergie, une courbe de puissance prioritaire brute et une courbe de puissance prioritaire en fonction d'une température de l'embrayage en analogie avec la première série de courbes mais sans que ces trois courbes soient référencées.

De plus, la deuxième série de courbes montre une courbe de puissance prioritaire de synthèse pour la protection de l'embrayage Psp.

La troisième série de courbes en dessous de la deuxième série montre une courbe de puissance prioritaire minimale pour la protection de la charge contenue dans le stockeur d'énergie, une courbe de puissance prioritaire brute et une courbe de puissance prioritaire en fonction d'une température de l'embrayage en analogie avec les première et deuxième série de courbes mais sans que ces trois courbes soient référencées.

De plus, la troisième série de courbes montre une courbe de puissance prioritaire finale coordonnée Ppfc.

Dans l'ovale O1 de la première série de courbes, l'embrayage chauffe. Il est procédé à une limitation voire à une annulation de la puissance à prélever sur le moteur thermique par le système électrique comprenant le stockeur d'énergie afin d'éviter de faire glisser plus l'embrayage.

Dans l'ovale O2 de la deuxième série de courbes, l'embrayage chauffe mais le niveau de charge du stockeur d'énergie devient inférieur au seuil de charge prioritaire. Il est procédé à une inhibition de la puissance prioritaire pour s'assurer d'un rechargement minimal afin d'avoir un niveau de charge supérieur au seuil de charge prioritaire.

Dans l'ovale O3 de la troisième série de courbes, l'embrayage chauffe. La puissance finale est finalement diminuée si le seuil de charge prioritaire est dépassé. Cette diminution peut se faire préférentiellement à faible régime car avec un embrayage chaud et un régime élevé d'où un embrayage fermé, il est possible de continuer la charge du stockeur d'énergie sans entraîner une augmentation de la température de l'embrayage.

L'invention n'est nullement limitée aux modes de réalisation décrits et illustrés qui n'ont été donnés qu'à titre d'exemples.

## Revendications

1. Procédé de protection d'un embrayage (4) d'un véhicule hybride comportant un moteur thermique (2), au moins une autre source motrice (10, 18) comprenant un stockeur d'énergie (12), l'embrayage (4) reliant au moins le moteur thermique à au moins un arbre d'entraînement de roues du véhicule, ladite au moins une autre source motrice (10, 18) étant située entre l'embrayage 4 et les roues, ou directement sur les roues, et présentant deux modes d'actionnement, un mode moteur dans lequel elle fournit de l'énergie de manière à délivrer un couple de traction ou d'assistance au moteur thermique (2) et un mode générateur dans lequel elle alimente un circuit électrique en ayant pour conséquence de pouvoir stocker de l'énergie fournie par le moteur thermique (2) via le stockeur d'énergie (12), le moteur thermique (2) et ladite au moins une autre source motrice (10, 18) fournissant respectivement un couple moteur thermique et un couple de traction ou d'assistance destinés à répondre à une demande de puissance motrice instantanée de la part du conducteur, un moyen d'analyse et de commande étant apte à commander le moteur thermique (2) et ladite au moins une autre source motrice (10, 18), à déterminer un niveau de charge du stockeur d'énergie (12), **caractérisé en ce que**, quand la température mesurée ou estimée de l'embrayage (4) dépasse un premier seuil de température prédéterminé et qu'un écart de régime entre l'amont et l'aval de l'embrayage (4) dépasse un seuil prédéterminé calibrable compris entre 0 et 1.000 tours par minute, le moyen d'analyse et de commande impose au moteur thermique de ne pas alimenter le stockeur d'énergie (12) tout en maintenant inactif ladite au moins une autre source motrice (10, 18) en mode moteur.

2. Procédé selon la revendication précédente, dans lequel le moyen d'analyse et de commande prend aussi en compte deux seuils de charge du stockeur d'énergie (12) prédéfinis, l'un étant défini comme un seuil de charge prioritaire et l'autre étant défini comme un seuil de charge délestable, le seuil de charge prioritaire étant inférieur au seuil de charge délestable, avec lorsque le moyen d'analyse et de commande détermine qu'un niveau de charge du stockeur d'énergie (12) est inférieur au seuil de charge prioritaire et que la température détectée de l'embrayage (4) est supérieure au premier seuil de température prédéterminé, le moyen d'analyse et de commande maintient le moteur thermique (2) en fonction d'alimentation du stockeur d'énergie (12).

3. Procédé selon la revendication 1 ou 2, dans lequel, quand la température mesurée ou estimée de l'embrayage (4) dépasse un deuxième seuil de température prédéterminé, un basculement au moins partiel de ladite au moins une autre source motrice (10, 18) en mode moteur est effectué par le moyen d'analyse et de commande, le couple transmis par l'embrayage (2) et par conséquent le couple fourni par le moteur thermique (2) étant alors diminués.

4. Procédé selon la revendication précédente, dans lequel le premier seuil de température est de 100°C et le deuxième seuil de température est de 180°C avec une plage de +/- 20% autour de chaque seuil.

5. Procédé selon l'une quelconque des deux revendications précédentes, dans lequel le basculement au moins partiel de ladite au moins une autre source motrice (10, 18) en mode moteur s'effectue de manière progressive.

6. Procédé selon la revendication précédente, dans lequel ladite au moins une autre source motrice (10, 18) comprend au moins deux autres sources motrices reliées respectivement à un arbre d'entraînement, une première (10) desdites au moins deux autres sources motrices (10, 18) étant basculée en priorité à ladite au moins une deuxième source (18) et, quand, après le basculement de la première source motrice (10) prioritaire, la température détectée reste supérieure au deuxième seuil de température, ladite au moins une deuxième source (18) est aussi basculée.

7. Ensemble d'un moteur thermique (2), d'au moins une autre source motrice (10, 18) comprenant un stockeur d'énergie (12), d'un embrayage (4) reliant au moins le moteur thermique (2) à au moins un arbre d'entraînement de roues du véhicule et d'un moyen d'analyse et de commande, l'autre source motrice(10, 18)étant située entre l'embrayage 4 et les roues, ou directement sur les roues, **caractérisé en ce qu'**il met en oeuvre un procédé de protection de l'embrayage (4) selon l'une quelconque des revendications précédentes, le moyen d'analyse et de commande présentant des moyens de mémorisation d'au moins un premier seuil de température, des moyens de comparaison dudit au moins un premier seuil de température avec une température mesurée ou estimée de l'embrayage et des moyens de suspension de l'alimentation du stockeur d'énergie (12) par le moteur thermique (2) .

8. Ensemble selon la revendication précédente, dans lequel ladite au moins une autre source motrice (10, 18) est une machine électrique, le stockeur d'énergie (12) étant au moins une batterie.

9. Véhicule automobile hybride, **caractérisé en ce qu'**il comporte un ensemble selon l'une quelconque des revendications 7 ou 8, le véhicule automobile comprenant un moyen de mesure de la température de l'embrayage.

10. Véhicule automobile selon la revendication précédente, lequel est un véhicule à quatre roues motrices avec un arbre d'entraînement avant couplé à une machine électrique avant (10) et un arbre d'entraînement arrière couplé à une machine électrique arrière (18), le moyen d'analyse et de commande présentant des moyens de basculement de la machine électrique avant (10) prioritaires par rapport aux moyens de basculement de la machine électrique arrière (18).

## Patentansprüche

1. Verfahren zum Schutz einer Kupplung (4) eines Hybridfahrzeugs umfassend einen Verbrennungsmotor (2), mindestens eine weitere Antriebsquelle (10, 18) umfassend einen Energiespeicher (12), wobei die Kupplung (4) mindestens den Wärmemotor anschließt an mindestens eine Radantriebswelle des Fahrzeugs, wobei die mindestens eine andere Energiequelle (10, 18) über zwei Betätigungsmodi verfügt, einen Motormodus, in dem sie Energie liefert, um der Wärme ein Traktions- oder Unterstützungsdrehmoment zuzuführen Motor (2) und einen Generatormodus, in dem er einen Stromkreis versorgt mit der Folge, dass er die von der Wärmekraftmaschine (2) gelieferte Energie über den Energiespeicher (12), die Wärmekraftmaschine (2) und die speichern kann wobei die mindestens eine andere Antriebskraftquelle (10, 18) jeweils ein Wärmemotordrehmoment und ein Traktions- oder Unterstützungsdrehmoment liefert, um einen momentanen Antriebsleistungsbedarf seitens des Fahrers zu decken, wobei ein Analyse- und Steuermittel die Steuerung übernehmen kann der Wärmekraftmaschine (2) und der mindestens einen anderen Antriebsquelle (10, 18), um einen Ladezustand der Energie (12) zu bestimmen, **dadurch gekennzeichnet, dass**, wenn die gemessene oder geschätzte Temperatur der Kupplung (4) a überschreitet ersten vorgegebenen Temperaturschwellenwert und dass eine Drehzahldifferenz zwischen stromaufwärts und stromabwärts der Kupplung (4) einen vorgegebenen kalibrierbaren Schwellenwert zwischen 0 und 1.000 Umdrehungen pro Minute überschreitet, wird die Analyse- und Steuereinrichtung der Wärmekraftmaschine auferlegen, den Energiespeicher nicht zu versorgen (12) während die mindestens eine andere Antriebsquelle (10, 18) im Motormodus inaktiv bleibt.

2. Verfahren nach dem vorhergehenden Anspruch, bei dem die Analyse- und Steuermittel auch zwei vordefinierte Ladeschwellenwerte des Energiespeichers (12) berücksichtigen, von denen eine als Prioritätsladeschwelle und die andere als Lastabwurfschwelle, die Prioritätslast, definiert ist Schwellenwert niedriger ist als der Lastabwurfschwellenwert, wobei die Analyse- und Steuermittel feststellen, dass ein Lastniveau des Energiespeichers (12) niedriger als der Schwellenprioritätslastwert ist und die erfasste Temperatur der Kupplung (4) größer als der erste ist vorgegebenen Temperaturschwelle hält das Analyse- und Steuermittel den Verbrennungsmotor (2) in Funktion zur Versorgung des Energiespeichers (12).

3. Verfahren nach Anspruch 1 oder 2, bei dem, wenn die gemessene oder geschätzte Temperatur der Kupplung (4) einen zweiten vorgegebenen Temperaturschwellenwert überschreitet, ein zumindest teilweises Umschalten der genannten zumindest einen anderen Antriebsquelle (10, 18) erfolgt Der Motorbetrieb erfolgt durch die Auswerte- und Steuereinrichtung, wobei dann das von der Kupplung (2) übertragene Drehmoment und damit das vom Verbrennungsmotor (2) bereitgestellte Drehmoment reduziert wird.

4. Verfahren nach dem vorhergehenden Anspruch, bei dem der erste Temperaturschwellenwert 100 °C und der zweite Temperaturschwellenwert 180 °C beträgt, mit einem Bereich von +/- 20 % um jeden Schwellenwert herum.

5. Verfahren nach einem der beiden vorhergehenden Ansprüche, bei dem das zumindest teilweise Umschalten der zumindest einen anderen Antriebsquelle (10, 18) in den Motormodus schrittweise erfolgt.

6. Verfahren nach dem vorhergehenden Anspruch, bei dem die mindestens eine andere Antriebsquelle (10, 18) mindestens zwei weitere Antriebsquellen umfasst, die jeweils mit einer Antriebswelle verbunden sind, einer ersten (10) der mindestens zwei anderen Antriebsquellen (10, 18) als Priorität auf die mindestens eine zweite Quelle (18) geschaltet wird und, wenn nach dem Umschalten der ersten Prioritäts-Antriebsquelle (10) die erfasste Temperatur über dem zweiten Temperaturschwellenwert bleibt, die mindestens eine zweite Quelle (18) vorrangig geschaltet wird eine zweite Quelle (18) wird ebenfalls geschaltet.

7. Baugruppe aus einer Wärmekraftmaschine (2), aus mindestens einer weiteren Antriebsquelle (10, 18), die einen Energiespeicher (12) umfasst, aus einer Kupplung (4), die mindestens die Wärmekraftmaschine (2) mit mindestens einem Radantrieb verbindet Welle des Fahrzeugs und einem Analyse- und Steuermittel, **dadurch gekennzeichnet, dass** es ein Verfahren zum Schutz der Kupplung (4) nach einem der oben genannten Ansprüche implementiert, wobei das Analyse- und Steuermittel Mittel zum Speichern mindestens eines ersten Temperaturschwellenwerts aufweist, Mittel zum Vergleichen des mindestens einen ersten Temperaturschwellenwerts mit einer gemessenen oder geschätzten Temperatur der Kupplung und Mittel zum Aussetzen der Stromversorgung des Energiespeichers (12) durch die Wärmekraftmaschine (2).

8. Baugruppe nach dem vorhergehenden Anspruch, bei der die mindestens eine andere Antriebsquelle (10, 18) eine elektrische Maschine ist und der Energiespeicher (12) mindestens eine Batterie ist.

9. Hybrides Kraftfahrzeug, **dadurch gekennzeichnet, dass** es eine Baugruppe nach einem der Ansprüche 7 oder 8 umfasst, wobei das Kraftfahrzeug ein Mittel zur Messung der Temperatur der Kupplung umfasst.

10. Kraftfahrzeug nach dem vorhergehenden Anspruch, das ein Fahrzeug mit Allradantrieb ist, mit einer vorderen Antriebswelle, die mit einer vorderen elektrischen Maschine (10) gekoppelt ist, und einer hinteren Antriebswelle, die mit einer hinteren elektrischen Maschine (18) gekoppelt ist, wobei das Mittel Analyse und Steuerung umfasst mit Mitteln zum Neigen der vorderen elektrischen Maschine (10), die Vorrang vor den Mitteln zum Neigen der hinteren elektrischen Maschine (18) haben.

## Claims

1. Method for protecting a clutch (4) of a hybrid vehicle comprising a combustion engine (2), at least one other driving source (10, 18) comprising an energy store (12), the clutch (4) connecting at least the heat engine to at least one wheel drive shaft of the vehicle, said at least one other power source (10, 18) having two modes of actuation, a motor mode in which it supplies energy from so as to deliver a traction or assistance torque to the heat engine (2) and a generator mode in which it supplies an electric circuit with the consequence of being able to store the energy supplied by the heat engine (2) via the storer of energy (12), the heat engine (2) and the said at least one other motive power source (10, 18) supplying respectively a heat engine torque and a traction or assistance torque intended to meet a demand for motive power instantaneous on the part of the driver, an analysis and control means being able to control the heat engine (2) and said at least one other driving source (10, 18), to determine a charge level of the energy (12), **characterized in that**, when the measured or estimated temperature of the clutch (4) exceeds a first predetermined temperature threshold and that a speed difference between the upstream and downstream of the clutch (4) exceeds a predetermined calibratable threshold between 0 and 1,000 revolutions per minute, the analysis and control means imposes on the heat engine not to supply the energy storer (12) while keeping said at least one other driving source inactive (10, 18) in engine mode.

2. Method according to the preceding claim, in which the analysis and control means also take into account two predefined energy storer (12) charge thresholds, one being defined as a priority charge threshold and the other being defined as a load shedding threshold, the priority load threshold being lower than the load shedding threshold, with when the analysis and control means determines that a load level of the energy storer (12) is lower than the threshold priority load and the detected temperature of the clutch (4) is greater than the first predetermined temperature threshold, the analysis and control means maintains the internal combustion engine (2) in function of supplying the energy storer (12).

3. Method according to claim 1 or 2, in which, when the measured or estimated temperature of the clutch (4) exceeds a second predetermined temperature threshold, an at least partial switching of the said at least one other driving source (10, 18) in motor mode is carried out by the analysis and control means, the torque transmitted by the clutch (2) and consequently the torque supplied by the combustion engine (2) then being reduced.

4. Method according to the preceding claim, in which the first temperature threshold is 100°C and the second temperature threshold is 180°C with a range of +/- 20% around each threshold.

5. Method according to any one of the two preceding claims, in which the at least partial switching of the said at least one other driving source (10, 18) to motor mode takes place gradually.

6. Method according to the preceding claim, in which the said at least one other driving source (10, 18) comprises at least two other driving sources connected respectively to a drive shaft, a first (10) of the said at least two other driving sources (10, 18) being switched as a priority to said at least one second source (18) and, when, after the switching of the first priority driving source (10), the detected temperature remains above the second temperature threshold, said at least one second source (18) is also switched.

7. Assembly of a heat engine (2), of at least one other driving source (10, 18) comprising an energy storer (12), of a clutch (4) connecting at least the heat engine (2) to at least one wheel drive shaft of the vehicle and an analysis and control means, **characterized in that** it implements a method for protecting the clutch (4) according to any one of the claims above, the analysis and control means having means for storing at least a first temperature threshold, means for comparing said at least one first temperature threshold with a measured or estimated temperature of the clutch and means suspension of the power supply to the energy storer (12) by the heat engine (2).

8. Assembly according to the preceding claim, in which the said at least one other driving source (10, 18) is an electric machine, the energy storer (12) being at least one battery.

9. Hybrid motor vehicle, **characterized in that** it comprises an assembly according to any one of Claims 7 or 8, the motor vehicle comprising a means for measuring the temperature of the clutch.

10. Motor vehicle according to the preceding claim, which is a four-wheel drive vehicle with a front drive shaft coupled to a front electric machine (10) and a rear drive shaft coupled to a rear electric machine (18), the means analysis and control having means for tilting the front electrical machine (10) which take priority over the means for tilting the rear electrical machine (18).
